# EUROPÄISCHE PATENTSCHRIFT

(11) **EP 4 799 124 B1**
(45) Veröffentlichungstag und Bekanntmachung des Hinweises auf die Patenterteilung: **14.10.2026**
(21) Anmeldenummer: 25784371.4
(22) Anmeldetag: 01.10.2025
(51) Int. Cl.: G06Q 10/1053, G06Q 10/0631, G06Q 30/0601

(54) **SYSTEM UND VERFAHREN ZUR UNTERSTÜTZUNG BEI DER ARBEITSMIGRATION**
SYSTEM AND METHOD FOR SUPPORTING LABOR MIGRATION
SYSTÈME ET PROCÉDÉ DE SOUTIEN À LA MIGRATION DE MAIN-D'OEUVRE

(30) Priorität: 08.01.2025 EP 25150736
(43) Veröffentlichungstag der Anmeldung: 02.09.2026
(73) Patentinhaber: HaBuS Verlag GmbH, 44787 Bochum (DE)
(72) Erfinder: HALLERBACH, Christian, 44789 Bochum (DE); HALLERBACH, Mathias, 44797 Bochum (DE)
(74) Vertreter: Osterhoff, Utz
(86) Internationale Anmeldenummer: PCT/EP2025/078210
(87) Internationale Veröffentlichungsnummer: WO 2026/149669

(56) Entgegenhaltungen:
- US-A1- 2023 121 647
- SHRUTHI K ET AL: "A Transparent and Privacy-Preserving Job Search Platform Built on the Ethereum Blockchain Framework", 2023 IEEE 2ND INTERNATIONAL CONFERENCE ON INDUSTRIAL ELECTRONICS: DEVELOPMENTS & APPLICATIONS (ICIDEA), IEEE, 29 September 2023 (2023-09-29), pages 235 - 242, XP034458680, DOI: 10.1109/ICIDEA59866.2023.10295065

## Beschreibung

Die vorliegende Erfindung betrifft ein System zur Unterstützung bei der Arbeitsmigration gemäß den Merkmalen des Anspruchs 1. Die Erfindung betrifft weiterhin ein Verfahren zur Unterstützung bei der Arbeitsmigration gemäß den Merkmalen des Anspruchs 11.

In vielen Ländern besteht insbesondere aufgrund der demografischen Entwicklung ein Fachkräftebedarf, welcher nicht allein durch die im jeweiligen Land lebenden Fachkräfte abgedeckt werden kann. Um Arbeitgebern die Suche nach entsprechenden Fachkräften zu erleichtern und um den Arbeitssuchenden selbst die Möglichkeit zu geben, sich mit ihren jeweiligen Fachkompetenzen auf dem Arbeitsmarkt zu bewerben, sind länderübergreifende Jobportale im Stand der Technik bekannt, auf welche über ein mit dem Internet verbundenes Endgerät zugegriffen werden kann.

Bei einem Jobportal handelt es sich in der Regel um eine zentral gehostete Plattform, auf der Arbeitgeber und Arbeitssuchende zusammenfinden können. Arbeitgeber können Stellenanzeigen schalten und Arbeitssuchende können sich über das Jobportal auf die ausgeschriebenen Stellen bewerben. Viele Jobportale bieten den Arbeitssuchenden zudem die Möglichkeit, ihre jeweiligen Bewerbungsunterlagen wie Lebenslauf, Zeugnisse und Zertifikate sowie anderweitige erworbene Qualifikationen direkt auf dem Portal hochzuladen, sodass der potentielle Arbeitgeber bei einer Bewerbung diese direkt einsehen kann.

Insbesondere bei der Arbeitsmigration, bei der arbeitssuchende Migranten aus einem Herkunftsland in ein Zielland einwandern und dort eine neue Stelle antreten wollen, ist die Migration selbst als auch der Einstellungsprozess bei einem Arbeitgeber mit vielen zusätzlichen Hürden verbunden. Die im Herkunftsland erworbenen Qualifikationen des Arbeitsmigranten müssen derart aufbereitet sein, dass potentielle Arbeitgeber in der Lage sind zu erkennen, ob die in Frage kommende Person für die ausgeschriebene Stelle qualifiziert ist. Dies erfordert oftmals die Einreichung zusätzlicher Dokumente wie Beglaubigungen und Übersetzungen. Auch die für die Einwanderung selbst erforderlichen Voraussetzungen, welche durch die Gesetze der jeweiligen Herkunftsund Zielländer vorgegeben sind, müssen durch die Arbeitsmigranten erfüllt werden.

Das Unwissen darüber, ob potentielle Bewerber bzw. Arbeitsmigranten die Voraussetzungen im Hinblick auf Migration und Qualifikation erfüllen, können Arbeitgeber davon abschrecken, entsprechende Arbeitsmigranten für vakante Stellen in Betracht zu ziehen. Zugleich können die komplexen Anforderungen für die erfolgreiche Arbeitsmigration die Arbeitsmigranten von einer Bewerbung im Ausland abschrecken, da oftmals der Überblick fehlt, welche Dokumente und Voraussetzungen für die Arbeitsmigration tatsächlich benötigt werden bzw. erfüllt werden müssen. Den Arbeitsmigranten fehlt zudem zum Teil die notwendige Motivation und das Durchhaltevermögen, den komplexen Arbeitsmigrationsprozess erfolgreich abzuschließen.

Die Veröffentlichung Shruthi K. et al: "A Transparent and Privacy-Preserving Job Search Platform Built on the Ethereum Blockchain Framework", 2023 IEEE 2ND INTERNATIONAL CONFERENCE ON INDUSTRIAL ELECTRONICS: DEVELOPMENTS & APPLICATIONS (ICIDEA), IEEE, 29. September 2023, Seiten 235-242 offenbart ein System, welches auf der Blockchain Technologie basiert. Das System ermöglicht einen sicheren Datenaustausch zwischen Arbeitgeber und Bewerber während des Bewerbungsprozesses. Ferner ist aus der US 2023/121647, Rao et al. ein Datenverarbeitungsprogramm bekannt.

Vor diesem Hintergrund ist die Aufgabe der vorliegenden Erfindung ein System sowie ein Verfahren zur Unterstützung bei der Arbeitsmigration aufzuzeigen, welches den Arbeitsmigranten eine Übersicht der für die erfolgreiche Arbeitsmigration notwendigen Schritte bereitstellt und diesen bei der aktiven Mitwirkung an der erfolgreichen Arbeitsmigration unterstützt.

Der erste Teil der Aufgabe wird durch ein System zur Unterstützung bei der Arbeitsmigration gemäß den Merkmalen des Anspruchs 1 gelöst. Der verfahrenstechnische Teil der Aufgabe wird durch ein Verfahren zur Unterstützung bei der Arbeitsmigration gemäß den Merkmalen des Anspruch 13 gelöst.

Vorteilhafte Weiterbildungen der Erfindung sind Gegenstand der abhängigen Ansprüche.

Das erfindungsgemäße System zur Unterstützung bei der Arbeitsmigration umfasst einen Server. Auf dem Server ist eine Software hinterlegt, die insbesondere die grundsätzlichen Funktionen eines im Stand der Technik bekannten Jobportals aufweist. Somit können Arbeitgeber über die Software Stellenanzeigen schalten und potentielle Bewerber, bei denen es sich im vorliegenden System um Arbeitsmigranten handelt, können sich auf die ausgeschriebenen Stellen bewerben.

Erfindungsgemäß dient die Software der Abbildung eines Arbeitsmigrationsprozesses. Der abgebildete Arbeitsmigrationsprozess umfasst insbesondere alle für die erfolgreiche Arbeitsmigration notwendigen Schritte, so dass den am System teilnehmenden Arbeitsmigranten eine Übersicht zur Verfügung gestellt wird, welche Dokumente, Qualifikationen und übrigen Daten zu welchem Zeitpunkt und an welcher Stelle, beispielsweise bei welcher Behörde, einzureichen bzw. vorzulegen sind. Der Arbeitsmigrationsprozess kann auch die für die angestrebte Stelle im Zielland benötigten Qualifikationen und die dazugehörigen Unterlagen abbilden.

Die Software ist über ein Endgerät abrufbar und Informationen und/oder Dokumente des Arbeitsmigranten sind mittels des Endgeräts in der Software hinterlegbar. Bei dem Endgerät kann es sich beispielsweise um einen Computer oder ein Smartphone handeln. Die für den Arbeitsmigrationsprozess erforderlichen Daten und/oder Dokumente können somit direkt über das Endgerät in der Software hinterlegt werden, so dass der Arbeitsmigrant jederzeit einen genauen Überblick über seine bereits hochgeladenen Dokumente hat. Beispielsweise können Scans von Zeugnissen, Prüfungsergebnissen oder anderweitigen Qualifikationen hochgeladen werden. Auch das Hochladen von Scans offizieller Dokumente wie Behördenbriefe ist möglich.

Erfindungswesentlich ist, dass der Server mit einem Kryptowährungsnetzwerk verbunden ist. Bei dem Kryptowährungsnetzwerk handelt es sich insbesondere um ein Netzwerk für eine eigens für das System konzipierte Kryptowährung, welche bevorzugt auch am freien Markt handelbar ist. Erfindungsgemäß ist dem Server und jedem am System teilnehmenden Arbeitsmigranten jeweils eine einzigartige Krypto-Wallet-Adresse innerhalb des Kryptowährungsnetzwerks zugewiesen.

Das System umfasst ferner ein Analysemodul, welches die hinterlegten Daten und/oder Dokumente des Arbeitsmigranten analysiert und bei Erfüllung eines in der Software hinterlegten Freigabekriteriums eine Anweisung an ein Überweisungsmodul zur Überweisung einer bestimmten Menge der Kryptowährung von der Krypto-Wallet-Adresse des Servers auf die Krypto-Wallet-Adresse des Arbeitsmigranten sendet. Bei der erfolgreichen Hinterlegung von arbeitsmigrationsrelevanten Daten und/oder Dokumenten in der Software, kann der Arbeitsmigrant somit durch den Erhalt der Kryptowährung direkt belohnt werden. So wird der Arbeitsmigrant zur aktiven Mitwirkung an der erfolgreichen Arbeitsmigration motiviert. Die erfindungsgemäße Kopplung des Servers mit dem Kryptowährungsnetzwerk ermöglicht es, dass jedem Arbeitsmigranten eine einzigartige Krypto-Wallet-Adresse zugewiesen wird, ohne, dass der Arbeitsmigrant ein Bankkonto im Ziel- oder Herkunftsland benötigt. Da entsprechende Konten oftmals nicht vorhanden und für den Arbeitsmigranten nur schwer zugänglich sind, bietet die erfindungsgemäße Nutzung eines Kryptowährungsnetzwerks eine Möglichkeit, den Arbeitsmigranten ohne bürokratischen Aufwand eine Belohnung in Form der Kryptowährung zukommen zu lassen. Hat der Arbeitsmigrant nach der erfolgreichen Arbeitsmigration ein Bankkonto im Zielland eröffnet, kann die bis dahin angesammelte Kryptowährung von der ihm zugewiesenen Krypto-Wallet-Adresse in die Währung des Ziellands umgewandelt und auf sein Bankkonto überwiesen werden.

Vorzugsweise ist das System so eingerichtet, dass der Arbeitsmigrant erst Zugriff auf das für ihn hinterlegte Kryptowallet erhält, wenn die komplette Arbeitsmigration erfolgreich abgeschlossen ist. Zwar kann der Arbeitsmigrant bereits vorher das Kryptowallet einsehen und die für die unterschiedlichen Arbeitsmigrationsschritte erhaltenen Belohnungen nachverfolgen, bei einem Abbruch der Arbeitsmigration hat der Arbeitsmigrant jedoch keinen Zugriff auf die in seinem Kryptowallet hinterlegte Kryptowährung.

In einer alternativen Ausführungsvariante kann dem Arbeitsmigranten bei Erfüllung bestimmter Voraussetzungen auch bereits vor Abschluss des Arbeitsmigrationsverfahrens Zugriff auf die ihm zugewiesene Krypto-Wallet-Adresse gewährt werden. So kann der Arbeitsmigrant bereits während des Migrationsprozesses angesammelte Kryptowährung in Echtgeld umwandeln.

Unter Kryptowährung ist im Sinne der Erfindung sind auch eine digitale Währung zu verstehen, also echte nationale Währung, die jedoch in einem digitalen Bezahlsystem vorliegt. Es ist dann ein entsprechend digitales Wallet als Kryptowährungswallet vorhanden. Dieses digitale Wallet kann der Arbeitsmigrant dann nach Belieben auf sein reales Konto auszahlen.

Vorzugsweise ist auch jedem teilnehmenden Arbeitgeber eine einzigartige KryptoWallet-Adresse innerhalb des Kryptowährungsnetzwerks zugewiesen. Insbesondere ist das System so konzipiert, dass die teilnehmenden Arbeitgeber zur Nutzung des Systems die Kryptowährung in das System einzahlen oder alternativ Kryptowährung innerhalb des Systems durch gängige nationale Währungen wie Euro oder US-Dollar, die sogenannte Fiatwährung, erwerben. Die so in das System eingebrachte Kryptowährung wird insbesondere auf das mit dem Server verknüpfte Kryptowallet eingezahlt, so dass diese von dort aus an die Krypto-Wallet-Adressen der teilnehmenden Arbeitsmigranten ausgeschüttet werden kann.

Das System umfasst eine künstliche Intelligenz, wobei die künstliche Intelligenz die Analyse der eingegebenen Daten und/oder Dokumente des Arbeitsmigranten durchführt. Nach einem initialen Training ist die künstliche Intelligenz in der Lage, die von dem Migranten hochgeladenen Daten und/oder Dokumente auf ihre Echtheit und Korrektheit hin zu überprüfen, so dass die Belohnung in Form der Kryptowährung erst ausgeschüttet wird, sofern der jeweilige Arbeitsmigrationsschritt tatsächlich erfolgreich vom Arbeitsmigranten absolviert worden ist. Beispielsweise können Scans von Urkunden oder Dokumenten von Behörden durch die künstliche Intelligenz auf ihre Echtheit hin überprüft werden. Die künstliche Intelligenz ist bevorzugt auf dem Server hinterlegt oder mit diesem gekoppelt.

Die künstliche Intelligenz führt einen Abgleich der analysierten Daten und/oder Dokumente des Arbeitsmigranten mit erforderlichen Daten und/oder Dokumenten des Arbeitsmigrationsprozesses durch. So kann mittels der künstlichen Intelligenz eine direkte Zuweisung zwischen den vom Arbeitsmigranten hochgeladenen Dokumenten zum jeweiligen Arbeitsmigrationsprozessschritt vorgenommen werden. Der Arbeitsmigrant hat somit in der auf dem Server hinterlegten Software eine direkte Übersicht, welche Voraussetzungen er für welchen erforderlichen Arbeitsmigrationsschritt bereits erfüllt hat.

In einer besonders vorteilhaften Ausführungsvariante der Erfindung ist der Arbeitsmigrationsprozess berufsspezifisch und basierend auf einer spezifischen Kombination aus Herkunftsland und Zielland ausgebildet. Je nach Beruf des Arbeitsmigranten sind unterschiedliche Voraussetzungen an die benötigten Qualifikationen und den entsprechenden Nachweisen gegeben. Ebenso sind abhängig von der spezifischen Kombination aus Herkunftsland und Zielland je nach Gesetzgebung der entsprechenden Länder unterschiedliche Voraussetzungen für die Migration vom Herkunfts- ins Zielland gegeben. Durch die Berücksichtigung des Berufs und der Kombination aus Herkunfts- und Zielland im abgebildeten Arbeitsmigrationsprozess ist sichergestellt, dass für die spezifische Situation des Arbeitsmigranten alle wesentlichen und erforderlichen Schritte für die erfolgreiche Arbeitsmigration in der Software verständlich dargestellt sind.

Vorzugsweise umfasst der abgebildete Arbeitsmigrationsprozess Module für die erfolgreiche Arbeitsmigration. Diese können insbesondere ein Antragstellungsmodul, ein Dokumentenmodul, ein Sprachtrainingsmodul, ein Übersetzungsmodul, ein Qualifikationsmodul und/oder ein Prüfungsmodul sein. Über die unterschiedlichen Module können die für die erfolgreiche Arbeitsmigration wesentlichen Schritte und Voraussetzungen separat und detailliert aufbereitet werden. Der Arbeitsmigrant hat somit jederzeit eine genaue Übersicht über seinen Fortschritt in den einzelnen Modulen.

Es hat sich als vorteilhaft herausgestellt, wenn der Migrationsfortschritt der am System teilnehmenden Arbeitsmigranten unter bestimmten Voraussetzungen von den am System teilnehmenden Arbeitgebern einsehbar ist. Die zu erfüllende Voraussetzung kann beispielsweise sein, dass die der betreffende Arbeitsmigrant auf eine ausgeschriebene Stelle des Arbeitgebers beworben hat. So ist der Arbeitgeber in der Lage abzuschätzen, ob der Arbeitsmigrant für die ausgeschriebene Stelle in Frage kommt, und wann mit einem Arbeitsantritt zu rechnen ist, sofern er eingestellt wird. Dies erleichtert den Arbeitgebern die Einstellung von ausländischen Fachkräften, da sie über das System einen genauen Überblick über den aktuellen Migrationsfortschritt des betreffenden Arbeitsmigranten erhalten. Arbeitsmigranten, welche aktiv an der erfolgreichen Arbeitsmigration mitwirken, sind zudem aufgrund der einsehbaren Fortschrittsanzeige attraktiver für potentielle Arbeitgeber.

Insbesondere basiert das Kryptowährungsnetzwerk auf der Blockchain-Technologie. Die Blockchain ist eine chronische Aneinanderreihung bzw. Verkettung von Blöcken, welche über eine kryptographische Signatur miteinander verknüpft sind. Dies hat den zusätzlichen Vorteil, dass die vom Arbeitsmigranten hinterlegten Daten und/oder Dokumente in der Blockchain dezentral gespeichert werden können. Dabei handelt es sich zum einen um eine sehr sichere Speicherungsmöglichkeit, sodass die sensiblen Daten der Arbeitsmigranten nicht von unbefugten Dritten eingesehen werden können. Zum anderen besteht die Möglichkeit, potentiellen Arbeitgebern bei Erfüllung bestimmter Voraussetzungen Zugriff auf die in der Blockchain hinterlegten Daten und/oder Dokumente des Arbeitsmigranten zu gewähren. Dies hat den Vorteil, dass die Arbeitgeber die Möglichkeit haben, den Migrationsfortschritt des Arbeitsmigranten einzusehen, um sicherzustellen, dass die Arbeitsmigration tatsächlich voranschreitet und der Arbeitsmigrant seine Arbeit zeitnah aufnehmen kann.

Vorteilhaft ist zudem, wenn den Arbeitgebern die einen Arbeitsmigranten einstellen wollen oder bereits eingestellt haben, mittels Reporting in regelmäßigen zeitlichen Abständen ein Statusbericht über den Migrationsfortschritt des Arbeitsmigranten zur Verfügung gestellt wird.

Das System kann ferner ein Identifikationsmodul zur Identifikation der Arbeitgeber und Arbeitsmigranten umfassen. Dies hat den Vorteil, dass die Echtheit der Arbeitgeber als auch der Arbeitsmigranten durch ein Hinterlegen entsprechender Identifikationsdokumente innerhalb des Systems nachgewiesen werden kann. So kann ein Ausschütten von Kryptowährung an unbefugte Dritte vermieden werden.

Das System umfasst vorzugsweise eine Schnittstelle zur Kopplung mit IT-Plattformen öffentlicher Institutionen und/oder Behörden. So ist es möglich, dass die von den Arbeitsmigranten in dem System hinterlegten Daten und/oder Dokumente direkt an die entsprechenden Behörden weitergeleitet werden können. Auch ein Empfangen von Dokumenten der Behörden und eine entsprechende Weiterleitung an die Arbeitsmigranten ist denkbar. Dies vereinfacht die Arbeitsmigration für die Arbeitsmigranten zusätzlich, da sie nur noch eine zentrale Anlaufstelle haben. Es ist nicht mehr erforderlich, dass für die erfolgreiche Migration separate Behördengänge bei anderweitigen öffentlichen Institutionen vorgenommen werden müssen.

Das erfindungsgemäße Verfahren zur Unterstützung bei der Arbeitsmigration umfasst die folgenden Verfahrensschritte:
- Bereitstellen eines Servers (2) auf dem eine Software zur Abbildung eines Arbeitsmigrationsprozesses (6) hinterlegt ist;
- Abrufen der Software über ein Endgerät (5) und Hinterlegung von Informationen und/oder Dokumenten eines am Verfahren teilnehmenden Arbeitsmigranten (4) mittels des Endgeräts (5) in der Software;
- Verbindung des Servers (2) mit einem Kryptowährungsnetzwerk (11), wobei dem Server (2) und jedem am System (1) teilnehmenden Arbeitsmigranten (4) jeweils eine einzigartige Krypto-Wallet-Adresse (13, 14) innerhalb des Kryptowährungsnetzwerks (11) zugewiesen wird;
- Analyse der hinterlegten Daten und/oder Dokumente des Arbeitsmigranten (4) mittels eines Analysemoduls (15), wobei die Analyse von einer künstlichen Intelligenz durchgeführt wird und die künstliche Intelligenz einen Abgleich der analytischen Daten und/oder Dokumente der Arbeitsmigranten mit erforderlichen Daten und/oder Dokumenten des Arbeitsmigrationsprozesses (6) durchführt;
- Senden einer Anweisung an ein Überweisungsmodul (16) zur Überweisung einer bestimmten Menge (X) der Kryptowährung von der Krypto-Wallet-Adresse (14) des Servers (2) auf die Krypto-Wallet-Adresse (13) des Arbeitsmigranten (4) bei Erfüllung eines in der Software hinterlegten Freigabekriteriums (F).

Alle vorgenannten Merkmale und Eigenschaften des erfindungsgemäßen Systems sind einzeln oder in beliebiger Kombination mit dem erfindungsgemäßen Verfahren kombinierbar.

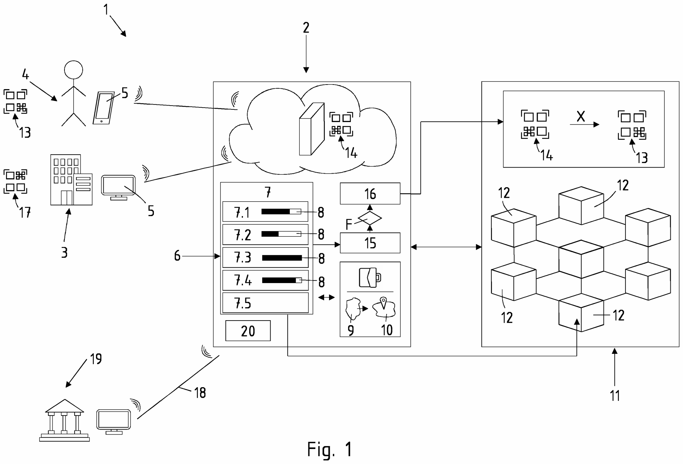

Ein bevorzugtes Ausführungsbeispiel des erfindungsgemäßen Systems ist in der rein schematisch dargestellten Figur 1 gezeigt. Für gleiche oder einander entsprechende Komponenten werden dieselben Bezugszeichen verwendet, auch wenn eine wiederholte Beschreibung aus vereinfachungsgründen entfällt.

Die Figur 1 zeigt ein erfindungsgemäßes System 1 zur Unterstützung und Motivation bei der Arbeitsmigration. Auf einem Server 2 ist eine Software hinterlegt. Die Software weist grundsätzlich die Funktionen eines im Stand der Technik bekannten Jobportals auf. Somit können Arbeitgeber 3 über die Software Stellenanzeigen schalten und potentielle Bewerber, bei denen es sich im vorliegenden System um Arbeitsmigranten 4 handelt, können sich auf die ausgeschriebenen Stellen bewerben.

Die Software ist über ein Endgerät 5 abrufbar. Das Endgerät 5 kann ein Computer oder ein Mobiltelefon sein. Über die Endgeräte 5 können die Arbeitgeber 3 und die Arbeitsmigranten 4 auf die Software zugreifen. Informationen und/oder Dokumente des Arbeitsmigranten 4, beispielsweise Scans von Zeugnissen oder Urkunden, sind mittels des Endgeräts 5 in der Software hinterlegbar.

Die Software ist zur Abbildung eines Arbeitsmigrationsprozesses 6 ausgebildet. Der Arbeitsmigrationsprozess 6 umfasst einzelne Module 7, in denen alle für die erfolgreiche Arbeitsmigration erforderlichen Schritte und Voraussetzungen abgebildet sind. Ein Antragstellungsmodul 7.1 dient der Bereitstellung von Informationen und Sammlung von Daten/Dokumenten zur Antragstellung, beispielsweise im Hinblick auf Anträge auf Arbeitserlaubnis oder Aufenthaltserlaubnis. Ein Sprachtrainingsmodul 7.2 unterstützt den Arbeitsmigranten 4 bei der Erlangung der für die Einwanderung und Arbeit im Zielland notwendigen Sprachkenntnisse. Ein Übersetzungsmodul 7.3 übersetzt die vom Zielland ausgestellten und hochgeladenen Dokumente in die Sprache des Herkunftslands und die vom Herkunftsland ausgestellten Dokumente in die Sprache des Ziellands. Ein Qualifikationsmodul 7.4 gibt eine Übersicht über die hochgeladenen Qualifikationen des Arbeitsmigranten 4. In einem Prüfungsmodul 7.5 werden alle vom Arbeitsmigranten 4 für die erfolgreiche Arbeitsmigration abgelegten Prüfungszertifikate hinterlegt. Ausgewählte Module 7 weisen eine Fortschrittsanzeige 8 auf, die den Fortschritt des Arbeitsmigranten 4 im jeweiligen Modul 7 bis zur Erlangung der für die erfolgreiche Arbeitsmigration erforderlichen Anforderungen anzeigt.

Der Arbeitsmigrationsprozess 6 ist berufsspezifisch und basierend auf einer spezifischen Kombination aus Herkunftsland 9 und Zielland 10 abgebildet. Da die Anforderungen ein eine erfolgreiche Arbeitsmigration sowohl vom Beruf des Arbeitsmigranten 4 als auch von der jeweiligen Gesetzgebung im Herkunftsland 9 und Zielland 10 abhängen, kann so sichergestellt werden, dass alle wesentlichen Schritte und Erfordernisse vollständig abgebildet sind.

Erfindungsgemäß ist der Server 2 mit einem Kryptowährungsnetzwerk 11 verbunden. Das Kryptowährungsnetzwerk 11 basiert auf der Blockchain-Technologie. Die Blockchain ist eine chronische Aneinanderreihung bzw. Verkettung von Blöcken 12, welche über eine kryptographische Signatur miteinander verknüpft sind. Dem Server 2 und jedem am System 1 teilnehmenden Arbeitsmigranten 4 ist jeweils eine einzigartige Krypto-Wallet-Adresse 13, 14 innerhalb des Kryptowährungsnetzwerks 11 zugewiesen. Die einzigartigen Krypto-Wallet-Adressen 13, 14 sind in Figur 1 durch ein QR-Code Symbol dargestellt. Die Krypto-Wallet-Adresse des Servers 2 ist in Figur 1 mit dem Bezugszeichen 14 versehen, während die Krypto-Wallet-Adresse des Arbeitsmigranten 4 das Bezugszeichen 13 aufweist.

Das System 1 umfasst ferner ein Analysemodul 15, welches die hinterlegten Daten und/oder Dokumente des Arbeitsmigranten 4 analysiert und bei Erfüllung eines in der Software hinterlegten Freigabekriteriums F eine Anweisung an ein Überweisungsmoduls 16 zur Überweisung einer bestimmten Menge X der Kryptowährung von der Krypto-Wallet-Adresse 14 des Servers 2 auf die Krypto-Wallet-Adresse 13 des Arbeitsmigranten 4 sendet. Das Analysemodul 15 und das Überweisungsmodul 16 sind in dem in Figur 1 gezeigten Ausführungsbeispiel auf dem Server 2 hinterlegt, können jedoch auch auf einem separaten Server gehostet werden. Das Freigabekriterium F wird ausgelöst, sobald bestimmte Anforderungen des Arbeitsmigrationsprozesses 6 vom Arbeitsmigranten 4 erfüllt werden. Beispielsweise das Hochladen erforderlicher Nachweise zur beruflichen Qualifikation.

Das erfindungsgemäße System 1 unterstützt und motiviert somit bei der Arbeitsmigration, indem durch den aufgezeigten Arbeitsmigrationsprozess 6 die für die erfolgreiche Arbeitsmigration erforderlichen Schritte und Unterlagen für den Arbeitsmigranten 4 klar dargestellt sind und dieser bei der aktiven Mitwirkung bei der Arbeitsmigration eine Belohnung in Form der Kryptowährung erhält.

Auch den am System 1 teilnehmenden Arbeitgebern 3 ist eine einzigartige KryptoWallet-Adresse 17 innerhalb des Kryptowährungsnetzwerks 11 zugewiesen. Die Arbeitgeber 3 können für die Nutzung des Systems 1 direkt einen bestimmten Betrag der Kryptowährung auf ihre Krypto-Wallet-Adresse 17 einzahlen, welche dann auf die Krypto-Wallet-Adresse 14 des Servers 2 überwiesen wird. Alternativ können die Arbeitsgeber 3 die Nutzung des Systems 1 auch mittels herkömmlicher Währungen bezahlen, welche dann automatisch in die Kryptowährung des Systems 1 umgewandelt wird. Anfallende Transaktionsgebühren bei der Umwandlung können direkt verrechnet werden.

Die Analyse der eingegebenen Daten und/oder Dokumente der Arbeitsmigranten 4 durch das Analysemodul 15 erfolgt durch eine künstliche Intelligenz, welche auf dem Server 2 installiert ist. Nach einem initialen Training ist die künstliche Intelligenz in der Lage, die von dem Arbeitsmigranten 4 hochgeladenen Daten und/oder Dokumente auf ihre Echtheit und Korrektheit hin zu überprüfen, so dass die Belohnung in Form der Kryptowährung erst überweisen wird, wenn der jeweilige Arbeitsmigrationsschritt tatsächlich erfolgreich vom Arbeitsmigranten 4 absolviert worden ist.

Die vom Arbeitsmigranten 4 hochgeladenen Daten und/oder Dokumente, sowie die jeweils in den Modulen 7 gespeicherten Informationen und Fortschrittsanzeigen 8 sind neben dem Server 2 auch auf einem nutzerspezifischen Block 12 der Blockchain gespeichert. Diese dezentrale Speicherung bietet eine sehr hohe Sicherheit. Es ist zudem möglich, dass der Arbeitgeber 3, auf dessen ausgeschriebene Stelle sich der Arbeitsmigrant 4 beworben hat, Einsicht in die in der Blockchain gespeicherten Daten und/oder Dokumente des Arbeitsmigranten 4 nehmen kann. Das System 1 bietet somit auch für die Arbeitgeber 3 den Vorteil, dass diese den ordnungsgemäßen Ablauf der geplanten Arbeitsmigration verfolgen und bei Unstimmigkeiten Kontakt mit dem Arbeitsmigranten 4 aufnehmen können.

Das System 1 umfasst eine Schnittstelle 18 zur Kopplung des Servers 2 mit IT-Plattformen öffentlicher Institutionen 19. So können in der Software hinterlegte Daten und/oder Dokumente des Arbeitsmigranten 4, welche bei öffentlichen Institutionen 19 des Herkunftslands 9 oder die Ziellands 10 vorgelegt werden müssen, direkt an die jeweiligen zuständigen öffentlichen Institutionen 19 weitergeleitet werden. Auch der Empfang von Dokumenten der öffentlichen Institutionen 19 ist über die Schnittstelle 18 möglich. Dies vereinfacht den Arbeitsmigrationsprozess deutlich, da ansonsten erforderliche Behördengänge entfallen können.

Das System 1 weist ein Identifikationsmodul 20 auf, welches der Identifikation der teilnehmenden Arbeitgeber 3 und Arbeitsmigranten 4 dient. So kann ein Missbrauch des Systems 1 verhindert werden. Insbesondere wird keine Kryptowährung an unbefugte Dritte ausgeschüttet.

### Bezugszeichen:

- 1 -: System
- 2 -: Server
- 3 -: Arbeitgeber
- 4 -: Arbeitsmigrant
- 5 -: Endgerät
- 6 -: Arbeitsmigrationsprozess
- 7 -: Module
- 7.1 -: Antragstellungsmodul
- 7.2 -: Sprachtrainingsmodul
- 7.3 -: Übersetzungsmodul
- 7.4 -: Qualifikationsmodul
- 7.5 -: Prüfungsmodul
- 8 -: Fortschrittsanzeige
- 9 -: Herkunftsland
- 10 -: Zielland
- 11 -: Kryptowährungsnetzwerk
- 12 -: Block
- 13 -: Krypto-Wallet-Adresse
- 14 -: Krypto-Wallet-Adresse
- 15 -: Analysemodul
- 16 -: Überweisungsmodul
- 17 -: Krypto-Wallet-Adresse
- 18 -: Schnittstelle
- 19 -: Öffentliche Institution
- 20 -: Identifikationsmodul

## Patentansprüche

1. System (1) zur Unterstützung bei der Arbeitsmigration mit den folgenden Merkmalen:
• auf einem Server (2) ist eine Software zur Abbildung eines Arbeitsmigrationsprozesses (6) hinterlegt;
• die Software ist über ein Endgerät (5) abrufbar und Informationen und/oder Dokumente eines am System (1) teilnehmenden Arbeitsmigranten (4) sind mittels des Endgeräts (5) in der Software hinterlegbar;
• der Server (2) ist mit einem Kryptowährungsnetzwerk (11) verbunden, wobei dem Server (2) und jedem am System (1) teilnehmenden Arbeitsmigranten (4) jeweils eine einzigartige Krypto-Wallet-Adresse (13, 14) innerhalb des Kryptowährungsnetzwerks (11) zugewiesen ist;
• das System (1) umfasst ein Analysemodul (15), welches die hinterlegten Daten und/oder Dokumente des Arbeitsmigranten (4) analysiert und bei Erfüllung eines in der Software hinterlegten Freigabekriteriums (F) eine Anweisung an ein Überweisungsmodul (16) zur Überweisung einer bestimmten Menge (X) der Kryptowährung von der Krypto-Wallet-Adresse (14) des Servers (2) auf die Krypto-Wallet-Adresse (13) des Arbeitsmigranten (4) sendet;
• das System (1) umfasst eine künstliche Intelligenz, wobei die künstliche Intelligenz die Analyse der eingegebenen Daten und/oder Dokumente des Arbeitsmigranten (4) durchführt,
• und die künstliche Intelligenz einen Abgleich der analysierten Daten und/oder Dokumente des Arbeitsmigranten (4) mit erforderlichen Daten und/oder Dokumenten des Arbeitsmigrationsprozesses (6) durchführt.

2. System (1) nach Anspruch 1, **dadurch gekennzeichnet, dass** jedem teilnehmenden Arbeitgeber (3) eine einzigartige Krypto-Wallet-Adresse (17) innerhalb des Kryptowährungsnetzwerks (11) zugewiesen ist.

3. System (1) nach einem der Ansprüche 1 bis 2, **dadurch gekennzeichnet, dass** der Arbeitsmigrationsprozess (6) berufsspezifisch und basierend auf einer spezifischen Kombination aus Herkunftsland (9) und Zielland (10) abgebildet ist.

4. System (1) nach einem der Ansprüche 1 bis 3, **dadurch gekennzeichnet, dass** der abgebildete Arbeitsmigrationsprozess (6) Module (7) für die erfolgreiche Arbeitsmigration umfasst, insbesondere ein Antragstellungsmodul (7.1), ein Sprachtrainingsmodul (7.2), ein Übersetzungsmodul (7.3), ein Qualifikationsmodul (7.4) und/oder ein Prüfungsmodul (7.5).

5. System (1) nach einem der Ansprüche 1 bis 4, **dadurch gekennzeichnet, dass** das Kryptowährungsnetzwerk (11) auf der Blockchain-Technologie basiert.

6. System (1) nach Anspruch 5, **dadurch gekennzeichnet, dass** die von den Arbeitsmigranten (4) hinterlegten Daten und/oder Dokumente in der Blockchain gespeichert sind.

7. System (1) nach Anspruch 6, **dadurch gekennzeichnet, dass** die in der Blockchain gespeicherten Daten und/oder Dokumente des Arbeitsmigranten (4) vom Arbeitgeber (3) einsehbar sind.

8. System (1) nach einem der Ansprüche 1 bis 7, **dadurch gekennzeichnet, dass** das System (1) ein Identifikationsmodul (20) zur Identifikation der Arbeitgeber (3) und Arbeitsmigranten (4) umfasst.

9. System (1) nach einem der Ansprüche 1 bis 8, **dadurch gekennzeichnet, dass** das System (1) eine Schnittstelle (18) zur Kopplung mit IT-Plattformen öffentlicher Institutionen (19) umfasst.

10. System (1) nach einem der Ansprüche 1 bis 9, **dadurch gekennzeichnet, dass** das Endgerät (5) mobil ausgebildet ist.

11. Verfahren zur Unterstützung bei der Arbeitsmigration mit den folgenden Verfahrensschritten:
• Bereitstellen eines Servers (2) auf dem eine Software zur Abbildung eines Arbeitsmigrationsprozesses (6) hinterlegt ist;
• Abrufen der Software über ein Endgerät (5) und Hinterlegung von Informationen und/oder Dokumenten eines am Verfahren teilnehmenden Arbeitsmigranten (4) mittels des Endgeräts (5) in der Software;
• Verbindung des Servers (2) mit einem Kryptowährungsnetzwerk (11), wobei dem Server (2) und jedem am System (1) teilnehmenden Arbeitsmigranten (4) jeweils eine einzigartige Krypto-Wallet-Adresse (13, 14) innerhalb des Kryptowährungsnetzwerks (11) zugewiesen wird;
• Analyse der hinterlegten Daten und/oder Dokumente des Arbeitsmigranten (4) mittels eines Analysemoduls (15), wobei die Analyse von einer künstlichen Intelligenz durchgeführt wird und die künstliche Intelligenz einen Abgleich der analytischen Daten und/oder Dokumente der Arbeitsmigranten mit erforderlichen Daten und/oder Dokumenten des Arbeitsmigrationsprozesses (6) durchführt;
• Senden einer Anweisung an ein Überweisungsmodul (16) zur Überweisung einer bestimmten Menge (X) der Kryptowährung von der Krypto-Wallet-Adresse (14) des Servers (2) auf die Krypto-Wallet-Adresse (13) des Arbeitsmigranten (4) bei Erfüllung eines in der Software hinterlegten Freigabekriteriums (F).

## Claims

1. A system (1) for assisting with labour migration, comprising the following features:
• software for mapping a labour migration process (6) is stored on a server (2);
• the software is accessible via a terminal device (5), and information and/or documents of a labour migrant (4) participating in the system (1) can be stored in the software by means of the terminal device (5);
• the server (2) is connected to a cryptocurrency network (11), wherein the server (2) and each labour migrant (4) participating in the system (1) are each assigned a unique crypto wallet address (13, 14) within the cryptocurrency network (11);
• the system (1) comprises an analysis module (15) which analyses the stored data and/or documents of the labour migrant (4) and, upon fulfilment of a release criterion (F) stored in the software, sends an instruction to a transfer module (16) to transfer a specified amount (X) of the cryptocurrency from the crypto wallet address (14) of the server (2) to the crypto wallet address (13) of the labour migrant (4);
• the system (1) comprises artificial intelligence, wherein the artificial intelligence performs the analysis of the entered data and/or documents of the labour migrant (4);
• and the artificial intelligence compares the analysed data and/or documents of the labour migrant (4) with required data and/or documents of the labour migration process (6).

2. The system (1) according to claim 1, **characterized in that** each participating employer (3) is assigned a unique crypto wallet address (17) within the cryptocurrency network (11).

3. The system (1) according to any one of claims 1 to 2, **characterized in that** the labour migration process (6) is mapped on an occupation-specific basis and based on a specific combination of a country of origin (9) and a destination country (10).

4. The system (1) according to any one of claims 1 to 3, **characterized in that** the mapped labour migration process (6) comprises modules (7) for successful labour migration, in particular an application module (7.1), a language training module (7.2), a translation module (7.3), a qualification module (7.4) and/or an examination module (7.5).

5. The system (1) according to any one of claims 1 to 4, **characterized in that** the cryptocurrency network (11) is based on blockchain technology.

6. The system (1) according to claim 5, **characterized in that** the data and/or documents stored by the labour migrants (4) are stored in the blockchain.

7. The system (1) according to claim 6, **characterized in that** the data and/or documents of the labour migrant (4) stored in the blockchain are accessible to the employer (3).

8. The system (1) according to any one of claims 1 to 7, **characterized in that** the system (1) comprises an identification module (20) for identifying the employers (3) and the labour migrants (4).

9. The system (1) according to any one of claims 1 to 8, **characterized in that** the system (1) comprises an interface (18) for coupling to IT platforms of public institutions (19).

10. The system (1) according to any one of claims 1 to 9, **characterized in that** the terminal device (5) is configured as a mobile device.

11. A method for assisting with labour migration, comprising the following method steps:
• providing a server (2) on which software for mapping a labour migration process (6) is stored;
• accessing the software via a terminal device (5) and storing information and/or documents of a labour migrant (4) participating in the method in the software by means of the terminal device (5);
• connecting the server (2) to a cryptocurrency network (11), wherein the server (2) and each labour migrant (4) participating in the system (1) are each assigned a unique crypto wallet address (13, 14) within the cryptocurrency network (11);
• analysing the stored data and/or documents of the labour migrant (4) by means of an analysis module (15), wherein the analysis is performed by artificial intelligence, and the artificial intelligence compares the analysed data and/or documents of the labour migrant with required data and/or documents of the labour migration process (6);
• sending an instruction to a transfer module (16) to transfer a specified amount (X) of the cryptocurrency from the crypto wallet address (14) of the server (2) to the crypto wallet address (13) of the labour migrant (4) upon fulfilment of a release criterion (F) stored in the software.

## Revendications

1. Système (1) d'assistance à la migration de main-d'œuvre, comprenant les caractéristiques suivantes:
• un logiciel destiné à représenter un processus de migration de main-d'œuvre (6) est stocké sur un serveur (2);
• le logiciel est accessible par l'intermédiaire d'un terminal (5), et des informations et/ou des documents d'un travailleur migrant (4) participant au système (1) peuvent être stockés dans le logiciel au moyen du terminal (5);
• le serveur (2) est connecté à un réseau de cryptomonnaie (11), une adresse unique de portefeuille de cryptomonnaie (13, 14) au sein du réseau de cryptomonnaie (11) étant attribuée respectivement au serveur (2) et à chaque travailleur migrant (4) participant au système (1);
• le système (1) comprend un module d'analyse (15) qui analyse les données et/ou les documents stockés du travailleur migrant (4) et qui, lorsqu'un critère de libération (F) stocké dans le logiciel est satisfait, envoie à un module de transfert (16) une instruction visant à transférer une quantité déterminée (X) de la cryptomonnaie depuis l'adresse de portefeuille de cryptomonnaie (14) du serveur (2) vers l'adresse de portefeuille de cryptomonnaie (13) du travailleur migrant (4);
• le système (1) comprend une intelligence artificielle, l'intelligence artificielle effectuant l'analyse des données et/ou des documents saisis du travailleur migrant (4);
• et l'intelligence artificielle effectue une comparaison des données et/ou des documents analysés du travailleur migrant (4) avec les données et/ou les documents requis pour le processus de migration de main-d'œuvre (6).

2. Système (1) selon la revendication 1, **caractérisé en ce qu'**une adresse unique de portefeuille de cryptomonnaie (17) au sein du réseau de cryptomonnaie (11) est attribuée à chaque employeur participant (3).

3. Système (1) selon l'une quelconque des revendications 1 à 2, **caractérisé en ce que** le processus de migration de main-d'œuvre (6) est représenté en fonction de la profession et sur la base d'une combinaison spécifique d'un pays d'origine (9) et d'un pays de destination (10).

4. Système (1) selon l'une quelconque des revendications 1 à 3, **caractérisé en ce que** le processus de migration de main-d'œuvre (6) représenté comprend des modules (7) destinés à permettre une migration de main-d'œuvre réussie, en particulier un module de demande (7.1), un module de formation linguistique (7.2), un module de traduction (7.3), un module de qualification (7.4) et/ou un module d'examen (7.5).

5. Système (1) selon l'une quelconque des revendications 1 à 4, **caractérisé en ce que** le réseau de cryptomonnaie (11) est basé sur la technologie de chaîne de blocs.

6. Système (1) selon la revendication 5, **caractérisé en ce que** les données et/ou les documents stockés par les travailleurs migrants (4) sont stockés dans la chaîne de blocs.

7. Système (1) selon la revendication 6, **caractérisé en ce que** les données et/ou les documents du travailleur migrant (4) stockés dans la chaîne de blocs sont accessibles à l'employeur (3).

8. Système (1) selon l'une quelconque des revendications 1 à 7, **caractérisé en ce que** le système (1) comprend un module d'identification (20) destiné à identifier les employeurs (3) et les travailleurs migrants (4).

9. Système (1) selon l'une quelconque des revendications 1 à 8, **caractérisé en ce que** le système (1) comprend une interface (18) destinée au couplage avec des plateformes informatiques d'institutions publiques (19).

10. Système (1) selon l'une quelconque des revendications 1 à 9, **caractérisé en ce que** le terminal (5) est conçu comme un dispositif mobile.

11. Procédé d'assistance à la migration de main-d'œuvre, comprenant les étapes de procédé suivantes:
• mise à disposition d'un serveur (2) sur lequel est stocké un logiciel destiné à représenter un processus de migration de main-d'œuvre (6);
• accès au logiciel par l'intermédiaire d'un terminal (5) et stockage, dans le logiciel au moyen du terminal (5), d'informations et/ou de documents d'un travailleur migrant (4) participant au procédé;
• connexion du serveur (2) à un réseau de cryptomonnaie (11), une adresse unique de portefeuille de cryptomonnaie (13, 14) au sein du réseau de cryptomonnaie (11) étant attribuée respectivement au serveur (2) et à chaque travailleur migrant (4) participant au système (1);
• analyse des données et/ou des documents stockés du travailleur migrant (4) au moyen d'un module d'analyse (15), l'analyse étant effectuée par une intelligence artificielle, et l'intelligence artificielle effectuant une comparaison des données et/ou des documents analysés du travailleur migrant (4) avec les données et/ou les documents requis pour le processus de migration de main-d'œuvre (6);
• envoi d'une instruction à un module de transfert (16) en vue de transférer une quantité déterminée (X) de la cryptomonnaie depuis l'adresse de portefeuille de cryptomonnaie (14) du serveur (2) vers l'adresse de portefeuille de cryptomonnaie (13) du travailleur migrant (4) lorsqu'un critère de libération (F) stocké dans le logiciel est satisfait.
